# EUROPEAN PATENT APPLICATION

(11) **EP 1 734 428 A2**
(43) Date of publication of application: **20.12.2006**
(21) Application number: 06252529.0
(22) Date of filing: 15.05.2006
(51) Int. Cl.: G05B 19/406

(54) **A system for monitoring and controlling operation of a machine having a detachable component**

(30) Priority: 16.05.2005 GB 0509966
(71) Applicant: Circuitmaster Designs Limited, Rochdale, Lancs OL16 5LW (GB)
(72) Inventor: Bainbridge, Andrew, Oldham OL3 6EN (GB)
(74) Representative: Waldren, Robin Michael

(57) **Abstract**

A system for monitoring and controlling operation of a machine having a detachable component for use in a manufacturing and/or machining process comprising a control unit for receiving one or more signals and/or data from an identification device identifying a component for use in a machine. The control unit is arranged to receive one or more signals and/or data associated with the component and to determine if a machine is operable on the basis of the received signals and/or data associated with the component. If the control unit determines the machine not to be operable on the basis of the received signals and/or data, the control unit is arranged to inhibit operation of the machine.

## Description

### Field of the Invention

The present invention relates to a system and method for monitoring and controlling operation of a machine having a detachable component for use in a manufacturing and/or machining process. The systems and methods may find particular use in component systems, in particular for forming work pieces using crimping presses and applicators.

### Background of the Invention

One of the most fundamental processes in the manufacture of wiring harnesses is the crimping of electrical terminals onto wires. This process is usually performed using a crimping press. There are thousands of different designs of conventional crimp terminals available and the press must be specifically configured to suit each individual one. Quick and easy changes of configuration are achieved conventionally by having an exchangeable applicator. The applicator is a precision engineered piece of equipment which must be maintained in good condition to avoid poor quality manufacturing. Many of the component parts of the applicator are subject to wear and tear and so these components need to be replaced at prescribed intervals as a preventative maintenance measure. In just-in-time or jobbing modes of operation, it is common for a crimping press to have its applicator exchanged many times each day. Keeping accurate records to track the applicator usage in order to schedule preventative maintenance is costly and time consuming and may be error prone. Furthermore, use of an applicator which is in poor condition may result in incorrect or faulty crimping.

Some conventional applicators may be fitted with a mechanical counter for counting the number of usages of the applicator, however, such counters may be bulky and can only provide a limited amount of data concerning the usage of the applicator.

### Summary of the Invention

In general terms, according to a first aspect of the invention there is provided a system for monitoring and controlling operation of a machine having a detachable component for use in a manufacturing and/or machining process, the system comprising:
a control unit for receiving one or more signals and/or data from an identification device identifying a component for use in a machine;
wherein the control unit is arranged to receive one or more signals and/or data associated with a component; the control unit further being arranged to determine if a machine is operable on the basis of the received one or more signals and/or data associated with a component and if the control unit determines the machine not to be operable on the basis of the received one or more signals and/or data, the control unit being arranged in use to inhibit operation of the machine.

Preferably, the one or more signals and/or data associated with a component comprises any one or more of usage data, identification data for identifying a component being used, and/or a date after which a component is not to be used.

In a preferred embodiment, usage data may comprise a number (or numbers) of permitted uses of a component and/or a number (or numbers) of actual uses of a component which may be associated with the number or numbers of permitted uses.

Preferably, the system further comprises an identification device for identifying a component for use in a machine. The identification device may be arranged to be attachable to or mountable on a component and may comprise a bar code for identifying a component and/or a memory device for storing data associated with a component.

Preferably, the memory device comprises a non-volatile RAM (NVR).

In a preferred embodiment, the control unit comprises a microprocessor for updating and/or storing one or more of the one or more signals and/or data associated with a component received by the control unit.

Preferably, the system further comprises a computer and/or a computer network connectable to the control unit to update and/or store data associated with a component.

Preferably, the system according further comprises a sensor for sensing in use the number of uses of a component, the sensor being connectable to or in wireless communication with the control unit to advise the control unit of the number of uses of a component.

In a preferred embodiment, the control unit is further arranged to update data associated with a component to record usage of the component.

Preferably, the system further comprises a switching device for inhibiting in use operation of the machine in response to a signal received from the control unit.

Preferably, the system further comprising a warning device connectable to the control unit to warn an operator on the basis of the one or more signals and/or data received by the control unit that a component may be used for a predetermined number of additional uses before the control unit acts to inhibit operation of the machine in use.

The warning device may comprise an LED and/or an LCD.

Preferably, the system further comprises one or more devices connectable to the control unit to inform an operator on the basis of the one or more signals and/or data received by the control unit of one or more of :
(a) that a component may be used;
(b) that a component may not be used;
(c) that operation of the machine is inhibited; and/or
(d) that operation of the machine is permitted.

Preferably, one or more of the one or more devices comprises an LED or an LCD.

In a preferred embodiment, the system further comprises a display device to display the status of a machine.

Preferably the control unit comprises a sentry unit for use in a crimping press.

According to a second aspect of the present invention there is provided a crimping component comprising the system defined above.

According to a third aspect of the present invention there is provided a method for monitoring and controlling operation of a machine having a detachable component for use in a manufacturing and/or machining process, the method comprising:
receiving in a control unit one or more signals and/or data from an identification device identifying a component for use in a machine;
receiving in the control unit one or more signals and/or data associated with the component;
determining in the control unit if a machine is operable on the basis of the received one or more signals and/or data associated with the component and if the control unit determines the machine not to be operable on the basis of the received one or more signals and/or data inhibiting operation of the machine.

One or more preferred embodiments of the present invention are advantageous as they provide apparatus and methods enabling enforcement of or at least the implementation of a preventive maintenance regime on the operation of a machine using a detachable component such as an applicator containing a tool or the tool itself. One or more preferred embodiments may also provide a means of enforcing additional prescribed working requirements at the point of manufacture, a means of electronically identifying each component such as an applicator containing a tool or the tool itself and retrieving its component usage values and prescribed limits, a means of advising when maintenance should be carried out and inhibiting usage when it is determined that maintenance may be due.

### Brief Description of the Drawings

The present invention will now be described by way of example and with reference to the accompanying drawings in which:
Figure 1 is a schematic block diagram of a system according to a first preferred embodiment of the invention;
Figure 2a is a perspective illustration of an applicator for use in an embodiment of the invention;
Figure 2b is a perspective illustration of a crimping press for use in an embodiment of the invention; and
Figure 3 is a perspective illustration of a base plate for use in an embodiment of the invention.

### Detailed Description of Preferred Embodiments

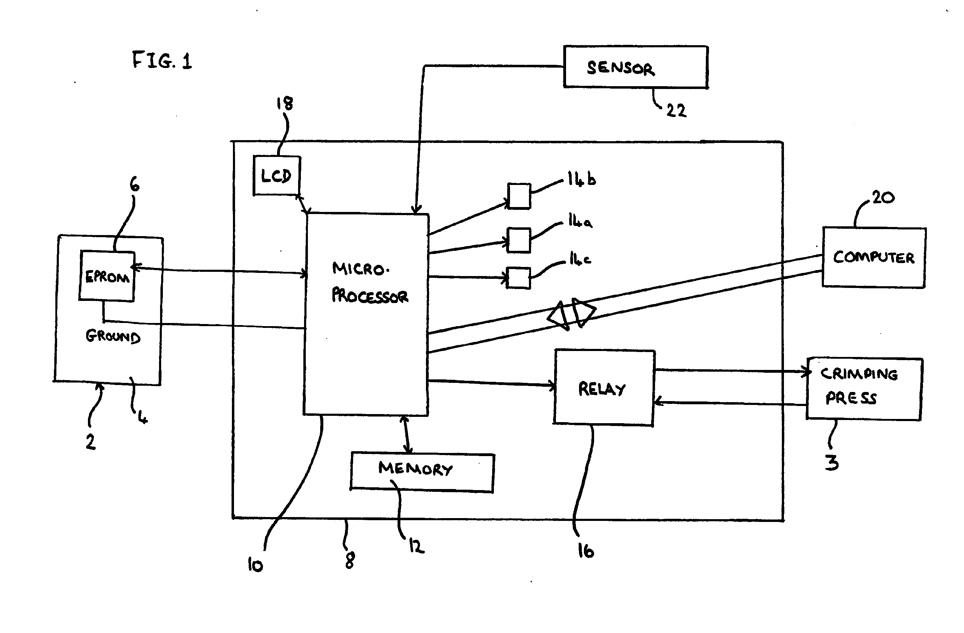

A system according to a first preferred embodiment of the invention is shown in Figure 1 and comprises a tag module 2 for attachment to an applicator (not shown) into which a crimping tool is mountable for use in a crimping press 3. The tag module 2 comprises a housing 4 enclosing a memory 6 such as an NVR for storing data such as identification data for identifying a particular applicator, data concerning the number of operations already performed by a particular applicator and, in a preferred embodiment, the maximum number of operations permitted and/or the expiry date of the applicator/crimping tool being used. The tag module 2 is electrically connectable to a sentry unit 8 mounted, in use, on the crimping press 3. The sentry unit 8 contains a microprocessor 10 coupled to a memory unit 12.

The microprocessor 10 is also connected to and controls the operation of three LEDs 14a, 14b, 14c, a first LED 14a being arranged to display an amber light, a second LED 14b being arranged to display a green light, and a third LED 14c being arranged to display a red light. The microprocessor 10 is further arranged to operate a relay 16 electrically connected to the crimping press 3 to block or permit operation of the crimping press 3 in use.

The microprocessor 10 may also be coupled to an LCD 18 for displaying, for example, data concerning the particular applicator being used to the operator of the crimping press 3 and other status information. In a preferred embodiment, the sentry unit 8 may be coupled to a computer system 20 which may contain and maintain, for example, a database of data concerning the applicators available for use with the crimping press 3, together with current usage data and expiry dates and limits of each applicator. In such an embodiment, the memory 6 in the tag module 2 may be arranged to provide only the identification of an applicator rather than retain the additional data such as data concerning the number of operations already performed by a particular applicator, the maximum number of operations permitted and/or the expiry date of the applicator/crimping tool being used. In such an embodiment, the memory may be omitted and instead such identification may be presented in the form of a bar code applied to an applicator.

A crimping press operation detector module 22 is connected to the microprocessor 10 and operates to detect each crimping operation of the crimping press 3 and to send a signal to the microprocessor 10 to advise the microprocessor 10 of each operation of the crimping press for the particular applicator attached to the crimping press 3. The operation detector module 22 may be in the form of a sensor, such as a magnetic sensor mountable on, for example, the applicator of the crimping press 3.

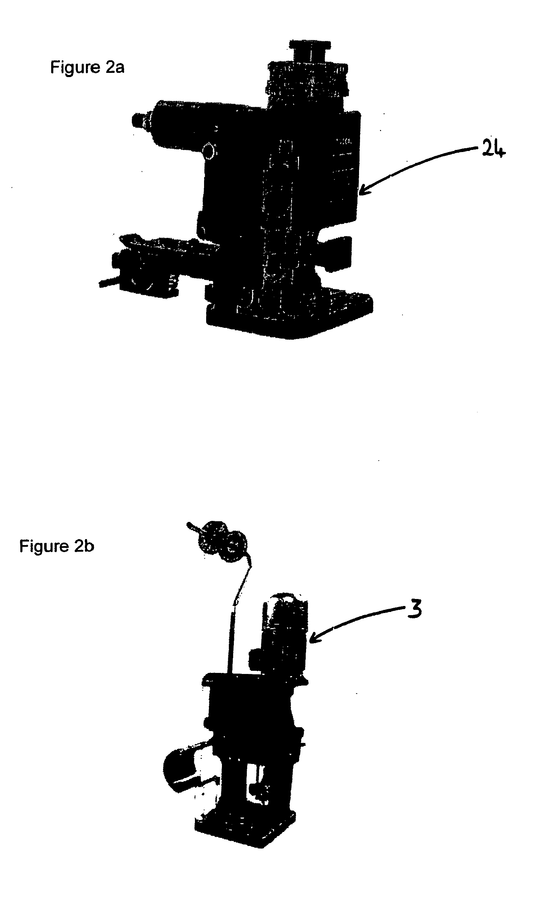

In operation, the tag module 2 is applied to or incorporated within an applicator 24 such as that shown in Figure 2a for use in a conventional crimping press 3 such as that shown in Figure 2b.

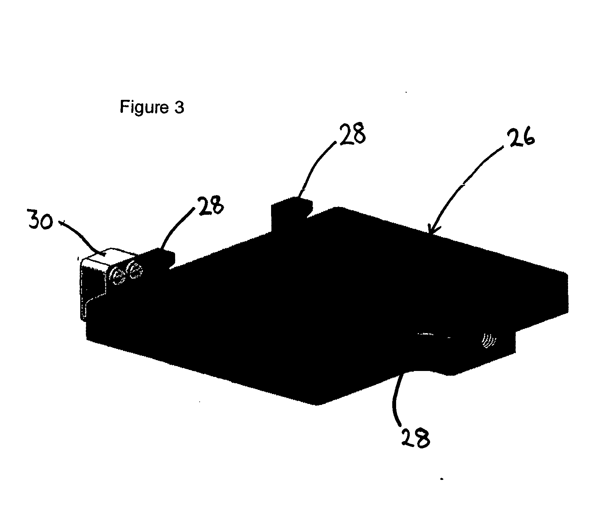

The base footprint of most conventional applicators conforms to industry standard dimensions. This allows them to be clamped into a standard base plate 26 such as that shown in Figure 3. In use, the base plate 26 is mounted on the crimping press 3 and the applicator 24 is mounted on the base plate. The applicator 24 is retained on the base plate 26 by engagement of a number of lugs 28 extending from the base plate 26 with corresponding ridges or indentations (not shown) in the applicator 24. One or more of the lugs 28 may be movable or fixed with respect to the base plate 26. The base plate 26 may be a conventional base plate.

In a preferred embodiment, a contact block 30 is attachable to the base plate 26 to provide electrical contact between the tag module 2 in the applicator which is mounted in use on the base plate 26 and the sentry unit 8.

In a first preferred embodiment, in use, a tag module 2 may be either attached to a conventional applicator or incorporated within an applicator on assembly. The memory 6 within the tag module 2 is programmed to include a range of data concerning the applicator to which the tag module 2 is connected or is to be connected, such as an identification of the applicator, data concerning the number of operations already performed by a particular applicator and, in a preferred embodiment, the maximum number of operations permitted and/or the expiry date of the applicator/crimping tool being used. The applicator 24 is then mounted on the crimping press 3 via the base plate 26. The sentry unit 8 may be mounted on the crimping press 3 or may be in a stand alone unit. On mounting of the applicator 24 on the crimping press 3, electrical contact between the sentry unit 8 and the applicator 24 is achieved through the contact block 30 attached, for example to the base plate 24. When the applicator is installed on a crimping press 3 contact plates (not shown) touch the spring loaded contacts on the contact block 30 to achieve electrical connection. The tag module 2 may only require a single data connection plus a ground connection to operate. The tag module 2 may be wired to simple connection plates mounted in a consistent position on each applicator.

Once the sentry unit 8 is switched on, the microprocessor 10 interrogates the tag module 2 to determine the identity of the applicator attached to the tag module 2 and any further data which may be stored in the memory 6 such as the number of operations already performed by the particular applicator, the maximum number of operations permitted and the expiry date of the applicator/crimping tool being used. The microprocessor 10 then compares the data received from the memory 6 in the tag unit 2 to determine the number of permitted operations remaining. If the number of permitted operations remaining is determined to be greater than a predetermined value, the microprocessor 10 operates the green LED 14b to indicate to the operator of the crimping press that the applicator is usable and a control signal is sent from the microprocessor 10 to the relay 16 to close the relay thereby permitting operation of the crimping press 3. If the number of operations performed is determined to be equal to or less than a predetermined number, the microprocessor 10 operates the amber LED 14a to indicate to the operator of the crimping press that the applicator is usable but is soon requiring servicing and a control signal is sent from the microprocessor 10 to the relay 16 to close the relay thereby permitting operation of the crimping press 3. However, if the number of operations performed equals the maximum number permitted, that is the number of permitted operations remaining is zero, the microprocessor 10 operates the red LED 14c to indicate to the operator of the crimping press that the applicator is not usable and the relay 16 opens to inhibit the crimping press 3 from being operated.

If the applicator has a date by which it must be serviced, this may also be checked by the microprocessor 10, for example against a real time clock built into the sentry unit 8, and, if it has been reached, again the microprocessor 10 operates the red LED 14c to indicate to the operator of the crimping press that the applicator is not usable and the relay 16 opens to inhibit the crimping press 3 from being operated. If the date has not yet been reached, and the number of permitted operations remaining is greater than zero, the operation of the crimping press is permitted. This feature assists in ensuring that even low utilization applicators may be routinely serviced.

Each operation of the crimping press 3 is detected by the crimping press operation detector unit 22 and this unit 22 sends a signal to the microprocessor 10 in the sentry unit 8 advising the microprocessor 10 of the operation of the crimping press 3. The microprocessor 10 then increments the number of operations stored in the memory 6 in the tag module 2 and reduces the number of permitted operations remaining by one. The number of operations remaining may be displayed on the LCD 18 if attached. If the number of permitted operations remaining then becomes less than or equal to the predetermined number, the green LED 14b is extinguished and the amber LED 14a is illuminated. Similarly, once the number of permitted operations remaining becomes zero, the amber LED 14a is extinguished and the red LED 14c is illuminated, the relay 16 opens inhibiting further operation of the crimping press 3 with the particular applicator attached.

The sentry unit 8 may be fitted to a conventional crimping press or may be integrated into crimping presses on assembly or manufacture. To reduce further the costs of the system whilst significantly increasing the scope of its capabilities, a number of modifications to the sentry unit may be made. For example, the microprocessor 10 may be programmed with a list of requirements for a particular production job. The requirements may specify which applicator or class of applicator must be used along with which terminals and which wire should be crimped in the crimping process. The reels of terminals and wires to be crimped may be ID tagged and these tags may be connected to the sentry unit 8 to determine whether or not the correct wires and terminal have been loaded into the crimping press to fulfil the job control requirements.

To reduce the likelihood of error in the usage of one or more preferred embodiments of the system according to the present invention, which could otherwise be extremely costly to rectify, a number of the job requirements may be programmed into the sentry unit 8 from the memory of a special job control tag or may be programmed through the computer or computer network 20 from a remote supervisor computer. Networked sentry units may supply quality, performance and traceability statistics to the supervising computer 20. The applicator's ID and the sentry unit's count of sensed operating cycles may be passed periodically to the supervising computer 20 which may be arranged to log the data, perform the operability or blocking decision for the crimping press based on the data received and stored and pass the result back to the sentry unit 8 to perform the operation or blocking act.

In a further preferred embodiment, the sentry unit 8 may have more than one input from the crimping press 3. However, only one signal is necessary for cycle counting but many processes may have a crimp force analysis (CFA) equipment installed which may provide pass and fail indications after every operating cycle. This manufacturing yield data may be passed back to the network supervising computer 20 and stored in a database for later analysis.

An additional job control requirement may be the presence of an operator ID tag. Production operatives may be issued with their own personal ID tags which may be read by the sentry unit 8 to unblock the press 3 and permit operation thereof. The operator ID may be returned to the network supervisor computer 20 to be stored along with other job information. Such an embodiment may improve traceability and individual responsibility.

The database of the supervising computer 20 which contains details of the applicators may also be queried to provide valuable management reports. Typical examples of this are a list of applicators, sorted by "remaining usage data" which may provide the basis for a properly prioritised preventative maintenance schedule. Furthermore, a live query by applicator ID may show the location of an applicator which is particularly useful as some multinational companies may not even know the country in which their applicators are located. Furthermore, a list of applicator components which break, that is where a component has been replaced before reaching its prescribed usage limit, may be sorted by frequency and may focus the operator's attention on recurring problems which may have a special underlying cause. Also, a report of the applicator, wire, terminal, operator and press lDs for each job may provide manufacturing traceability.

In a further preferred embodiment, the operation detector module 22 may have one or more electrical inputs which sense operating cycles of the press rather than be in the form of a magnetic sensor. Furthermore, usage data may be stored in the memory 6 as passive numeric data. The tag module 2 may thereby be physically smaller than conventional mechanical usage counters and may have a much lower installation cost as well as being suitable for installation on a much wider range of applicators.

In one or more preferred embodiments of the invention, the sentry unit 8 may only need to identify the applicator by reading a very simple, totally passive tag associated therewith. Furthermore, in a networked mode of operation, tagging could be achieved using wireless technologies such as barcode labels or RF ID devices.

Various modifications to the embodiments of the present invention described above may be made and other components and method steps may be added or substituted for those described above. For example, the sentry unit 8 described above does not have to be restricted to use in a crimping process, but could be a general control unit applied to many manufacturing and/or machining processes having a tool which is detachable from a machine. In the context of the specification, the terms "tool" and "component" may be construed to include any part of a device including subcomponents and are not to be considered to be limited to a machining tool. Furthermore, whilst the embodiments described above include a relay 16 to inhibit or permit operation of the crimping press 3, other devices such as switching devices may be used to perform this operation. Thus, although the invention has been described using particular embodiments, many variations are possible within the scope of the claims, as will be clear to the skilled reader, without departing from the invention.

## Claims

1. A system for monitoring and controlling operation of a machine having a detachable component for use in a manufacturing and/or machining process, the system comprising:
a control unit for receiving one or more signals and/or data from an identification device identifying a component for use in a machine;
wherein the control unit is arranged to receive one or more signals and/or data associated with a component; the control unit further being arranged to determine if a machine is operable on the basis of the received one or more signals and/or data associated with a component and if the control unit determines the machine not to be operable on the basis of the received one or more signals and/or data, the control unit being arranged in use to inhibit operation of the machine.

2. A system according to claim 1, wherein the one or more signals and/or data associated with a component comprises any one or more of usage data, identification data for identifying a component being used, and/or a date after which a component is not to be used.

3. A system according to claim 2, wherein usage data comprises a number (or numbers) of permitted uses of a component and/or a number (or numbers) of actual uses of a component.

4. A system according to any one of the preceding claims, further comprising an identification device for identifying a component for use in a machine.

5. A system according to claim 4, wherein the identification device is arranged to be attachable to or mountable on a component.

6. A system according to any one of claims 4 or 5, wherein the identification device comprises a bar code for identifying a component.

7. A system according to any one of claims 4 to 6, wherein the identification device comprises a memory device for storing data associated with a component.

8. A system according to claim 7, wherein the memory device comprises a non-volatile RAM.

9. A system according to any one of the preceding claims, wherein the control unit comprises a microprocessor for updating and/or storing one or more of the one or more signals and/or data associated with a component received by the control unit.

10. A system according to any one of the preceding claims, further comprising a computer and/or a computer network connectable to the control unit to update and/or store data associated with a component.

11. A system according to any one of the preceding claims, further comprising a sensor for sensing in use the number of uses of a component, the sensor being connectable to or in wireless communication with the control unit to advise the control unit of the number of uses of a component.

12. A system according to any one of the preceding claims, wherein the control unit is further arranged to update data associated with a component to record usage of the component.

13. A system according to any one of the preceding claims, further comprising a switching device for inhibiting in use operation of the machine in response to a signal received from the control unit.

14. A system according to any one of the preceding claims, further comprising a warning device connectable to the control unit to warn an operator on the basis of the one or more signals and/or data received by the control unit that a component may be used for a predetermined number of additional uses before the control unit acts to inhibit operation of the machine in use.

15. A system according to claim 14, wherein the warning device comprises an LED and/or an LCD.

16. A system according to any one of the preceding claims, further comprising one or more devices connectable to the control unit to inform an operator on the basis of the one or more signals and/or data received by the control unit of one or more of :
(a) that a component may be used;
(b) that a component may not be used;
(c) that operation of the machine is inhibited; and/or
(d) that operation of the machine is permitted.

17. A system according to claim 16, wherein one or more of the one or more devices comprises an LED or an LCD.

18. A system according to any one of the preceding claims, further comprising a display device to display the status of a machine.

19. A system according to any one of the preceding claims, wherein the control unit comprises a sentry unit for use in a crimping press.

20. A crimping component comprising the system according to any one of the preceding claims.
receiving in a control unit one or more signals and/or data from an identification device identifying a tool for use in a machine;
receiving in the control unit one or more signals and/or data associated with the tool;
determining in the control unit if a machine is operable on the basis of the received one or more signals and/or data associated with the tool and if the control unit determines the machine not to be operable on the basis of the received one or more signals and/or data inhibiting operation of the machine.
